# EUROPÄISCHE PATENTSCHRIFT

(11) **EP 0 808 539 B1**
(45) Veröffentlichungstag und Bekanntmachung des Hinweises auf die Patenterteilung: **04.10.2001**
(21) Anmeldenummer: 96900281.5
(22) Anmeldetag: 18.01.1996
(51) Int. Cl.: H04M 3/22, H04Q 3/00, H04Q 1/26

(54) **VERFAHREN ZUR FERNWARTUNG**
METHOD OF REMOTE MAINTENANCE
PROCEDE D'ENTRETIEN A DISTANCE

(30) Priorität: 08.02.1995 DE 19504076
(43) Veröffentlichungstag der Anmeldung: 26.11.1997
(73) Patentinhaber: Tenovis GmbH & Co. KG, 60362 Frankfurt am Main (DE)
(72) Erfinder: RUPPERT, Manfred, D-61449 Steinbach (DE); CUNY, Georges, D-61118 Bad Vilbel (DE)
(86) Internationale Anmeldenummer: DE9600060
(87) Internationale Veröffentlichungsnummer: WO9625002

(56) Entgegenhaltungen:
- DE-A- 2 839 172
- DE-A- 3 715 773

## Beschreibung

### Stand der Technik

Verfahren zur Fernwartung einer, am öffentlichen Fernsprechnetz angeschlossenen Fernsprechnebenstellenanlage, wobei die Fernwartung durch eine am öffentlichen Fernsprechnetz angeschlossene Serviceeinrichtung durchgeführt wird und zwischen der Fernsprechnebenstellenanlage und der Serviceeinrichtung über das öffentliche Fernsprechnetz eine Verbindung zum Austausch von Informationen, Meldungen, Daten, usw. herstellbar ist.

Ein derartiges Verfahren ist bereits bekannt. So wird in der DE 36 31 168 A1 ein Verfahren beschrieben, bei welchem über eine Wählleitung, d.h. über das öffentliche Fernsprechnetz die Fernwartung einer Fernsprechnebenstellenanlage durch eine am öffentlichen Fernsprechnetz angeschlossene Serviceeinrichtung möglich ist.

Da bei einer Fernwartung der Zugang zur Fernsprechnebenstellenanlage über das öffentliche Fernsprechnetz erfolgt, besteht die Gefahr, daß auch Fernwartungen an einer Fernsprechnebenstellenanlage durch nicht autorisierte Serviceeinrichtungen vorgenommen werden können.

Die Aufgabe der Erfindung besteht nun darin, ein Verfahren anzugeben, mit welchem verhindert wird, daß eine Fernwartung durch nicht autorisierte Serviceeinrichtungen vorgenommen werden kann.

Diese Aufgabe wird dadurch gelöst, daß auf Veranlassung der Fernsprechnebenstellenanlage eine Verbindung über das öffentliche Fernsprechnetz zu einer ersten Serviceeinrichtung in regelmäßigen Abständen aufgebaut wird, daß zwischen beiden Einrichtungen Informationen ausgetauscht werden, daß anschließend die Verbindung auf Veranlassung einer der beiden beteiligten Einrichtungen ausgelöst wird und daß nur dann durch eine zweite, am öffentlichen Fernsprechnetz angeschlossene Serviceeinrichtung eine Fernwartung in der Fernsprechnebenstellenanlage durchführbar ist, wenn ein regelmäßiger Informationsaustausch zwischen der Fernsprechnebenstellenanlage und der ersten Serviceeinrichtung stattgefunden hat, da andernfalls die Fernsprechnebenstellenanlage gegen eine Fernwartung gesperrt ist.

Durch die regelmäßige Verbindung zwischen der Fernsprechnebenstellenanlage und der ersten Serviceeinrichtung findet ein Informationsaustausch zwischen beiden Einrichtungen statt, in Zuge dessen eine Überprüfung in der ersten Serviceeinrichtung dahingehend stattfindet, ob die betreffende Fernsprechnebenstellenanlage noch in einer aktuellen Liste vorhanden ist. Ist dies der Fall, so wird von seiten der ersten Serviceeinrichtung die Rufnummer der betreffenden Serviceeinrichtung an die Fernsprechnebenstellenanlage übertragen und dort eingespeichert. Wird nun die Fernsprechnebenstellenanlage aus der Liste in der ersten Serviceeinrichtung entfernt und die Rufnummer der ersten Serviceeinrichtung nicht mehr an die Fernsprechnebenstellenanlage übertragen, so ist diese nicht mehr länger in der Lage, eine regelmäßige Verbindung zur ersten Serviceeinrichtung zu veranlassen. Nach Ablauf des Zeitintervalls zwischen zwei regelmäßigen Anrufen bei der ersten Serviceeinrichtung wird die Fernsprechnebenstellenanlage selbsttätig gegen Anruf zum Zweck der Fernwartung gesperrt, d.h. eine Fernwartung durch eine zweite Serviceeinrichtung ist nicht mehr möglich.

Vorteilhafte Weiterbildungen der Erfindung ergeben sich aus den Unteransprüchen.

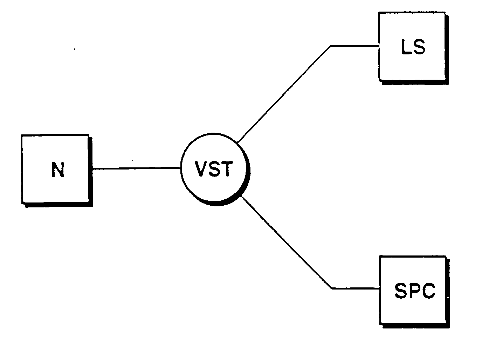

Die Erfindung wird anhand eines Ausführungsbeispiels näher erläutert, welches in der Zeichnung dargestellt ist.

Die Erfindung ist sowohl auf analoge als auch digitale Fernsprechnebenstellenanlagen anwendbar, ebenso kann es sich bei den Anschlußleitungen, über welche die Fernsprechnebenstellenanlage und die übrigen Einrichtungen am öffentlichen Fernsprechnetz angeschlossen sind, um digitale oder auch um analoge Anschlußleitungen handeln, es muß jedoch nur dafür Sorge getragen werden, daß die Übertragung von digitalen Informationen auf den Anschlußleitungen im Gesprächszustand möglich ist (z.B. mit Hilfe eines Modems).

Bei dem Ausführungsbeispiel wird davon ausgegangen, daß die einzelnen Einrichtungen an einer öffentlichen Vermittlungsstelle VSt angeschlossen sind. Anstelle dieser einen Vermittlungsstelle kann es sich jedoch auch um ein ganzes öffentliches Fernsprechnetz bestehend aus einer Vielzahl von Vermittlungsstellen VSt handeln, wobei die einzelnen Einrichtungen an unterschiedlichen öffentlichen Vermittlungsstellen VSt angeschlossen sein können.

Eine Fernsprechnebenstellenanlage N ist über eine oder mehrere Amtsleitungen oder auch über eine besondere Teilnehmeranschlußleitung, welche an einem besonderen Wartungsanschluß angeschlossen ist, mit der öffentlichen Vermittlungsstelle VSt verbunden. Ebenso an der öffentlichen Vermittlungsstelle VSt ist eine Leitstelle LS und eine oder mehrere Serviceeinrichtung SPC angeschlossen. Die Serviceeinrichtung(-en) SPC ist bzw. sind in der Lage, Fernwartungsarbeiten an der Fernsprechnebenstellenanlage N durchzuführen. Hierunter sind in erster Linie Prüfungen innerhalb der Fernsprechnebenstellenanlage, die Übertragung von Programmen, welche im entsprechenden Speicher einer Steuereinrichtung der Fernsprechnebenstellenanlage N abgelegt werden, die Änderungen von Berechtigungen der einzelnen Anschlüsse der Fernsprechnebenstellenanlage N usw. zu verstehen. Unter die Fernwartung fallen nicht Alarmmeldungen, welche selbsttätig von der Fernsprechnebenstellenanlage N zu einer Serviceeinrichtung gesendet werden.

Die Fernsprechnebenstellenanlage N bzw. deren Steuereinrichtung ist derart eingestellt, daß diese in regelmäßigen Abständen einen Verbindungsaufbau über die öffentliche Vermittlungsstelle VSt zu einer Leitstelle LS veranlaßt. Die Rufnummer der Leitstelle ist zu diesem Zweck in der Fernsprechnebenstellenanlage N eingespeichert. Sobald die Verbindung zwischen der Fernsprechnebenstellenanlage N und der Leitstelle LS durchgeschaltet ist, wird von der Fernsprechnebenstellenanlage N zur Leitstelle LS eine Information über die Identität der Fernsprechnebenstellenanlage übertragen. In der Leitstelle LS findet eine Überprüfung auf das Vorhandensein einer Information über diese Fernsprechnebenstellenanlage N in einer Liste statt. Ist die betreffende Fernsprechnebenstellenanlage N in dieser Liste vorhanden, dann sendet die Leitstelle LS die Rufnummer der Leitstelle LS an die Fernsprechnebenstellenanlage N, wo diese eingetragen wird. Anschließend wird die Verbindung durch eine der beiden an der Verbindung beteiltigen Einrichtungen ausgelöst.

Befindet sich nun die betreffende Fernsprechnebenstellenanlage N nicht mehr in der Liste, die sich in einem nicht gezeigten Speicher der Leitstelle LS befindet, dann unterbleibt die Übermittlung der Rufnummer der Leitstelle LS an die Fernsprechnebenstellenanlage. Dies hat zur Folge, daß die dort eingespeicherte Rufnummer der Leitstelle LS gelöscht wird. Die Fernsprechnebenstellenanlage N ist nun nicht mehr in der Lage, eine Verbindung zur Leitstelle LS aufzubauen und Daten mit dieser auszutauschen. Die nicht gezeigte Steuereinrichtung der Fernsprechnebenstellenanlage N ist dahingehend eingestellt, daß nach Ablauf einer vorgegebenen Zeit, d.h. kurz nach dem Zeitpunkt des nächsten regelmäßigen Verbindungsaufbaus zwischen der Fernsprechnebenstellenanlage N und der Leitstelle LS keine Verbindung mehr zustandekommt und aufgrund dieses Kriteriums die Fernsprechnebenstellenanlage N gegen eine Fernwartung gesperrt wird. Das bedeutet, daß zwar eine Verbindung von einer Serviceeinrichtung SPC über die öffentliche Vermittlungsstelle VSt zur Fernsprechnebenstellenanlage N bzw. zu deren Wartungsanschluß aufgebaut werden kann, die Fernsprechnebenstellenanlage jedoch gegen eine Fernwartung gesperrt ist.

Diese Blockade kann jederzeit wieder aufgehoben werden, wenn von seiten der Leitstelle LS eine Verbindung über die öffentliche Vermittlungsstelle VSt zur Fernsprechnebenstellenanlage N aufgebaut wird und ein besonderes Paßwort übertragen wird. Mit Hilfe dieses Paßwortes wird die Fernsprechnebenstellenanlage insoweit freigegeben, daß die Rufnummer der Leitstelle LS übertragen und in der Fernsprechnebenstellenanlage N eingespeichert werden kann. Sobald die Rufnummer der Leitstelle LS wieder in der Fernsprechnebenstellenanlage N vorhanden ist, kann diese sich wieder regelmäßig bei der Leitstelle LS in der bereits beschriebenen Weise melden.

Es ist auch denkbar, daß das Paßwort, welches selbstverständlich jederzeit geändert werden kann, mit jedem Informationsaustausch von der Leitstelle LS zur Fernsprechnebenstellenanlage N übertragen wird, wobei zur Erhöhung der Sicherheit auch die Serviceeinrichtung SPC sich mit diesem Paßwort bei der Fernsprechnebenstellenanlage N bei Einleitung der Fernwartung vorstellen muß. Besteht keine Übereinstimmung der beiden Paßwörter, so wird ebenfalls die Fernsprechnebenstellenanlage N gegen eine Fernwartung durch die betreffende Serviceeinrichtung SPC gesperrt.

## Patentansprüche

1. Verfahren zur Fernwartung einer am öffentlichen Fernsprechnetz angeschlossenen Fernsprechnebenstellenanlage (N), wobei die Fernwartung durch eine am öffentlichen Fernsprechnetz angeschlossene Serviceeinrichtung (SPC, LS) durchgeführt wird und zwischen der Fernsprechnebenstellenanlage und der Serviceeinrichtung über das öffentliche Fernsprechnetz eine Verbindung zum Austausch von Informationen, Meldungen, Daten, usw. herstellbar ist, **dadurch gekennzeichnet, daß** auf Veranlassung der Fernsprechnebenstellenanlage (N) eine Verbindung über das öffentliche Fernsprechnetz zu einer ersten Serviceeinrichtung (LS) in regelmäßigen Abständen aufgebaut wird, **daß** zwischen den beiden Einrichtungen (N, LS) Informationen ausgetauscht werden, das anschließend die Verbindung auf Veranlassung einer der beiden beteiltigten Einrichtungen (N, LS) ausgelöst wird und **daß** nur dann durch eine zweite, am öffentlichen Fernsprechnetz angeschlossene Serviceeinrichtung (SPC) eine Fernwartung in der Fernsprechnebenstellenanlage (N) durchführbar ist, wenn ein regelmäßiger Informationsaustausch zwischen der Fernsprechnebenstellenanlage (N) und der ersten Serviceeinrichtung (LS) stattgefunden hat, da andernfalls die Fernsprechnebenstellenanlage (N) gegen eine Fernwartung gesperrt ist.

2. Verfahren nach Anspruch 1, **dadurch gekennzeichnet, daß** mit jedem Informationsaustausch die Rufnummer der ersten Serviceeinrichtung (LS) zur Fernsprechnebenstellenanlage (N) übertragen und dort eingespeichert wird.

3. Verfahren nach einem der Ansprüche 1 oder 2, **dadurch gekennzeichnet, daß** mit jedem Informationsaustausch eine Information über die Identität der Fernsprechnebenstellenanlage (N) übertragen wird.

4. Verfahren nach einem der Ansprüche 1 bis 3, **dadurch gekennzeichnet, daß** die Fernsprechnebenstellenanlage (N) durch die-erste Serviceeinrichtung (LS) gegen eine Fernwartung gesperrt werden kann.

5. Verfahren nach einem der Ansprüche 1 bis 4, **dadurch gekennzeichnet, daß** die erste Serviceeinrichtung (LS) als Leitstelle für eine Vielzahl von zweiten Serviceeinrichtungen (SPC) ausgebildet ist.

6. Verfahren nach einem der Ansprüche 1 bis 5, **dadurch gekennzeichnet, daß** von der ersten Serviceeinrichtung (LS) zur Fernsprechnebenstellenanlage (N) ein Paßwort übertragen wird, welches in derselben eingespeichert wird.

7. Verfahren nach einem der Ansprüche 1 bis 6, **dadurch gekennzeichnet, daß** bei der Einleitung einer Fernwartung die zweite Serviceeinrichtung (SPC) ein Paßwort an die Fernsprechnebenstellenanlage (N) übermittelt, welches mit dem eingespeicherten Paßwort verglichen wird und **daß** nur dann eine Fernwartung von der Fernsprechnebenstellenanlage (N) freigegeben wird, wenn das übertragene Paßwort mit dem eingespeicherten Paßwort übereinstimmt.

## Claims

1. Method for remote maintenance of a private branch telephone exchange (N) which is connected to the public telephone network, the remote maintenance being carried out by means of a service device (SPC, LS) which is connected to the public telephone network, and it being possible to establish between the private branch telephone exchange and the service device via the public telephone network a connection for exchanging information, messages, data etc., **characterized in that** the private branch telephone exchange (N) brings about a connection via the public telephone network to a first service device (N, LS) at regular intervals, **in that** information is exchanged between the two devices (N, LS), **in that** one of the two participating devices (N, LS) subsequently releases the connection, and **in that** it is possible to carry out remote maintenance in the private branch telephone exchange (N) by means of a second service device (SPC) which is connected to the public telephone network only when regular exchange of information has taken place between the private branch telephone exchange (N) and the first service device (LS) since otherwise the private branch telephone exchange (N) is blocked against remote maintenance.

2. Method according to Claim 1, **characterized in that** with each exchange of information the call number of the first service device (LS) is transmitted to the private branch telephone exchange (N) and stored there.

3. Method according to one of Claims 1 and 2, **characterized in that** with each exchange of information an item of information relating to the identity of the private branch telephone exchange (N) is transmitted.

4. Method according to one of Claims 1 to 3, **characterized in that** the private branch telephone exchange (N) is blocked against remote maintenance by the first service device (LS).

5. Method according to one of Claims 1 to 4, **characterized in that** the first service device (LS) is designed as a control centre for a multiplicity of second service devices (SPC).

6. Method according to one of Claims 1 to 5, **characterized in that** the first service device (LS) transfers to the private branch telephone exchange (N) one password which is stored in the same.

7. Method according to one of Claims 1 to 6, **characterized in that** upon initiation of remote maintenance the second service device (SPC) transfers to the private branch telephone exchange (N) a password which is compared with the stored password, and **in that** remote maintenance is enabled by the private branch telephone exchange (N) only if the transferred password corresponds to the stored password.

## Revendications

1. Procédé d'entretien à distance d'une installation de téléphone (N) reliée à un réseau de téléphone public, selon lequel l'entretien à distance est exécuté par une installation de service (SPC, LS) raccordée au réseau de téléphone public, et une liaison peut s'établir entre l'installation de téléphone et l'installation d'entretien par l'intermédiaire du réseau téléphonique public pour échanger des informations, des messages, des données, etc.,
**caractérisé en ce que**
• l'installation de téléphone (N), prend l'initiative de construire une liaison par l'intermédiaire du réseau téléphonique public vers une première installation d'entretien (LS), à des intervalles réguliers,
• les deux installations (N, LS) échangent des informations, et la liaison est coupée à l'initiative de l'une des deux installations participantes (N, LS), et
• ce n'est qu'à ce moment qu'une seconde installation d'entretien (SPC), raccordée au réseau téléphonique public, effectue un travail d'entretien à distance dans l'installation de téléphone (N), s'il y a eu un échange d'informations régulier entre l'installation de téléphone (N) et la première installation d'entretien (LS), et dans le cas contraire, l'installation de téléphone (N) est interdite pour un travail d'entretien à distance.

2. Procédé selon la revendication 1,
**caractérisé en ce qu'**
avec chaque échange d'informations, on transmet le numéro d'appel de la première installation d'entretien (LS) vers l'installation de téléphone (N) qui le mémorise.

3. Procédé selon l'une quelconque des revendications 1 ou 2,
**caractérisé en ce qu'**
avec chaque échange d'informations on transmet une information concernant l'identité de l'installation de téléphone (N).

4. Procédé selon l'une quelconque des revendications 1 à 3,
**caractérisé en ce que**
l'installation de téléphone (N) peut être bloquée pour un travail d'entretien, par la première installation d'entretien (LS).

5. Procédé selon l'une des revendications 1 à 4,
**caractérisé en ce que**
la première installation d'entretien (LS) est réalisée comme poste pilote pour un grand nombre de secondes installations d'entretien (SPC).

6. Procédé selon l'une des revendications 1 à 5,
**caractérisé en ce que**
la première installation d'entretien (LS) transmet un mot de passe vers l'installation de téléphone (N) qui enregistre celui-ci.

7. Procédé selon l'une des revendications 1 à 6,
**caractérisé en ce que**
lorsqu'elle lance un travail d'entretien à distance, la seconde installation d'entretien (SPC) transmet un mot de passe à l'installation de téléphone (N), ce mot étant comparé au mot de passe enregistré et le travail d'entretien à distance est seulement autorisé par l'installation de téléphone (N) si le mot de passe transmis correspond au mot de passe enregistré.
